# EUROPEAN PATENT APPLICATION

(11) **EP 4 800 345 A1**
(43) Date of publication of application: **02.09.2026**
(21) Application number: 26158791.9
(22) Date of filing: 16.02.2026
(51) Int. Cl.: F41G 1/473, F41G 1/36, F41G 3/06, G02B 23/10

(54) **OVERLAY ADJUSTMENTS FOR FIREARM MOUNTED CLIP ON DEVICE**

(30) Priority: 23.02.2025 US 202563761996 P; 12.03.2025 US 202519077748
(71) Applicant: N-Vision Optics, LLC, Needham, MA 02494 (US)
(72) Inventor: RIVKIN, Maxim, Newton (US); LEE, Tzehin, Newton (US)
(74) Representative: Westphal, Mussgnug & Partner, Patentanwälte mbB

(57) **Abstract**

A firearm-mounted clip-on device includes a weapon mount adaptor disposed on the device to attach the device to a firearm in front of a day scope mounted on the firearm, a display that is viewable from an eyepiece of the day scope that shows objects in a field-of-view of the firearm-mounted clip-on device and one or more overlay layers superimposed thereon and containing one or more overlay components, and a control that adjusts the one or more overlay layers without moving or resizing objects in a field-of-view of the day scope to cause the overlay components to appear in the eyepiece in the field-of-view of the day scope. The firearm-mounted clip-on device may also include an infrared sensor that provides a thermal image to the display. At least some of the overlay components may correspond to operation of the firearm-mounted clip-on device. The overlay components may include icons and/or text.

## Description

### TECHNICAL FIELD

This application is directed to the field of firearm-mounted optical clip-on devices, and more particularly to the field of using a combination of a firearm-mounted optical clip-on device and a day scope in a way that facilitates viewing overlay(s) of the firearm-mounted optical clip-on device as a user modifies magnification settings of the day scope.

### BACKGROUND OF THE INVENTION

It is sometimes useful to mount a clip-on device, such as a thermal imaging device or a night vision scope, directly in front of a day scope on a firearm, such as a rifle or a machine gun. The day scope provides a reticle for aiming the rifle and the clip-on device provides an image, such as a thermal image corresponding to incident infrared radiation on a thermal imaging device. A thermal imaging device, for example, is useful for detecting, recognizing, and/or identifying targets at night or in other situations where visibility is compromised. In operation, the thermal image from the thermal imaging device is viewed by the user through the day scope.

The firearm-mounted optical clip-on device, such as a thermal imaging device, may use on-screen graphical and/or text overlays that include icons, status bar(s), menu settings, range distance value(s), ballistics calculations, and/or other information. The overlay(s) provide useful information to the user of the thermal imaging device. However, mounting the thermal imaging device in front of a day scope may cause the overlay(s) to no longer be visible when a user increases the magnification of the day scope since increasing the magnification decreases an amount of the display of the thermal imaging device that is visible through the day scope.

### SUMMARY OF THE INVENTION

Accordingly, it is desirable to provide a mechanism that maintains overlays from a firearm-mounted optical clip-on device in view when a user changes the magnification of a day scope mounted behind the firearm-mounted optical clip-on device.

According to the system described herein, a firearm-mounted clip-on device includes a weapon mount adaptor disposed on the firearm-mounted clip-on device to attach the firearm-mounted clip-on device to a firearm in front of a day scope mounted on the firearm, a display that is viewable from an eyepiece of the day scope that shows objects in a field-of-view of the firearm-mounted clip-on device and one or more overlay layers superimposed thereon and containing one or more overlay components, and a control that adjusts the one or more overlay layers without moving or resizing objects in a field-of-view of the day scope to cause the overlay components to appear in the eyepiece in the field-of-view of the day scope. The firearm-mounted clip-on device may also include an infrared sensor that provides a thermal image to the display. The firearm-mounted clip-on device may also include a laser range finder that that measures distances to objects in the field-of-view of the firearm-mounted clip-on device. At least some of the overlay components may include text that indicates a distance to at least one of the objects in the field-of-view of the firearm-mounted clip-on device measured by the laser range finder. The display may show the thermal image in black-and-white. The control may include a plurality of buttons mounted on the firearm-mounted clip-on device. At least some of the overlay components may correspond to operation of the firearm-mounted clip-on device. The overlay components may include icons and/or text. Adjusting the one or more overlay layers may include moving at least one of the one or more overlay layers up and down and side to side and/or expanding and contracting at least one of the one or more overlay layers. A size of the overlay components may change when the at least one of the one or more overlay layers is expanded or contracted.

According further to the system described herein, using a firearm-mounted clip-on device includes mounting the firearm-mounted clip-on device on a firearm in front of a day scope mounted on the firearm to provide a view of a display of the firearm-mounted clip-on device through an eyepiece of the day scope and adjusting one or more overlay layers of the firearm-mounted clip-on device without moving or resizing objects in a field-of-view of the day scope to cause overlay components of the one or more overlay layers to appear in the eyepiece in the field-of-view of the day scope. The firearm-mounted clip-on device may include an infrared sensor that provides a thermal image to the display of the firearm-mounted clip-on device. The firearm-mounted clip-on device may include a laser range finder that that measures distances to objects in the field-of-view of the firearm-mounted clip-on device. At least some of the overlay components may include text that indicates a distance to at least one of the objects in a field-of-view of the firearm-mounted clip-on device measured by the laser range finder. The display of the firearm-mounted clip-on device may show the thermal image in black-and-white. Adjusting the one or more overlay layers may include actuating a plurality of buttons mounted on the firearm-mounted clip-on device. At least some components of the one or more overlay layers may correspond to operation of the firearm-mounted clip-on device. The overlay components may include icons and/or text. Adjusting the one or more overlay layers may include moving at least one of the one or more overlay layers up and down and side to side and/or expanding and contracting at least one of the one or more overlay layers. A size of components of at least one of the one or more overlay layers may change when the at least one of the one or more overlay layers is expanded or contracted.

### BRIEF DESCRIPTION OF THE DRAWINGS

Embodiments of the system described herein will now be explained in more detail in accordance with the figures of the drawings, which are briefly described as follows.
FIG. 1 illustrates a thermal imaging device according to the system described herein.
FIG. 2 is a front view of a thermal imaging device according to the system described herein.
FIG. 3 illustrates an alternative embodiment of a thermal imaging device that includes a laser range finder according to the system described herein.
FIG. 4 illustrates a rifle having a day scope and a thermal imaging device mounted thereon according to the system described herein.
FIG. 5 illustrates a control for a thermal imaging device according to the system described herein.
FIGs. 6A-6H Illustrates corrective action to restore overlay(s) of a thermal imaging device within a field-of-view of a day scope according to the system described herein.
FIG. 7 is a schematic diagram illustrating components of a thermal imaging device according to the system described herein.
FIG. 8 is a flow diagram illustrating software that operates a thermal imaging device according to the system described herein.
FIG. 9 is a schematic diagram illustrating an alternative embodiment of a firearm having a day scope and a thermal imaging device mounted thereon according to the system described herein.

### DETAILED DESCRIPTION OF VARIOUS EMBODIMENTS

The system described herein provides a mechanism for adjusting one or more on-screen graphical and/or text overlay layers for a firearm-mounted optical clip-on device (clip-on) to be visible within a field-of-view of a day scope mounted on a firearm behind the clip-on to compensate for any offset between the clip-on and the day scope and to compensate for magnification setting adjustments of the day scope. A control is provided to adjust the one or more overlay layers to maintain visibility of the one or more overlay layers when viewed through the day scope.

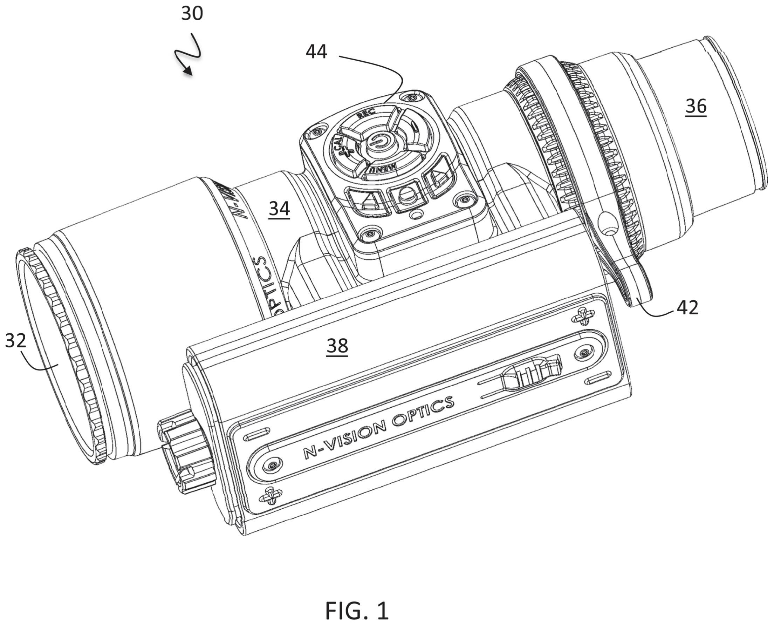

Referring to FIG. 1, a thermal imaging device 30 includes an objective lens 32, a body 34, an eyepiece 36, a battery pack 38, a focus ring 42 for the objective lens 32, and a control 44. The thermal imaging device 30 provides a thermal image visible through the eyepiece 36 based on detected infrared radiation received through the objective lens 32. The thermal image may be focused by adjusting the focus ring 42. The body 34 contains an infrared sensor (not shown in FIG. 1) that provides signals to a processing device (not shown in FIG. 1) where the signal corresponds to the detected infrared radiation. The processing device drives a display (not shown in FIG. 1) that provides the thermal image that is visible through the eyepiece 36. The sensor, the processing device, and the display may receive power from batteries in the battery pack 38. Note, however, that it is also possible to provide electrical power externally (e.g., through a USB connection) instead of, or in addition to, providing electrical power via the battery pack 38. Note also that, although the system described herein is illustrated with the thermal imaging device 30, it should be understood that the invention is not so limited and can be adapted to other types of firearm-mounted optical clip-on devices, such as a night vision scope.

In operation, the eyepiece 36 shows a thermal image corresponding to infrared radiation that is incident on the objective lens 32. A user may look directly through the eyepiece 36 to see the thermal image. However, it is also possible to attach the thermal imaging device 30 to a firearm in front of a conventional day scope for the firearm. In such a case, the front of the day scope roughly aligns with the eyepiece 36. A user looks through the day scope to see the thermal image visible through the eyepiece 36. A magnification setting for the day scope determines how much of the thermal image is visible to the user through the day scope. As described in more detail elsewhere herein, the thermal imaging device 30 has a mechanism to adjust one or more overlay layers on the thermal image that are visible through the day scope irrespective of the magnification setting for the day scope. However, in some cases, it may be possible that the magnification settings for the day scope are so high that components of an overlay layer of a thermal imaging device may not be visible even with adjustment.

The control 44 may be used to alter the thermal image provided through the eyepiece 36 (e.g., zoom in and zoom out) and may also be used to control other functionality of the thermal imaging device 30, such as calibration and/or non-uniformity correction. The control 44 is described in more detail elsewhere herein. Note, however, that the thermal imaging device 30 may be implemented using any appropriate control mechanism that facilitates providing the functionality described herein, including providing only some of the functionality and/or providing additional functionality.

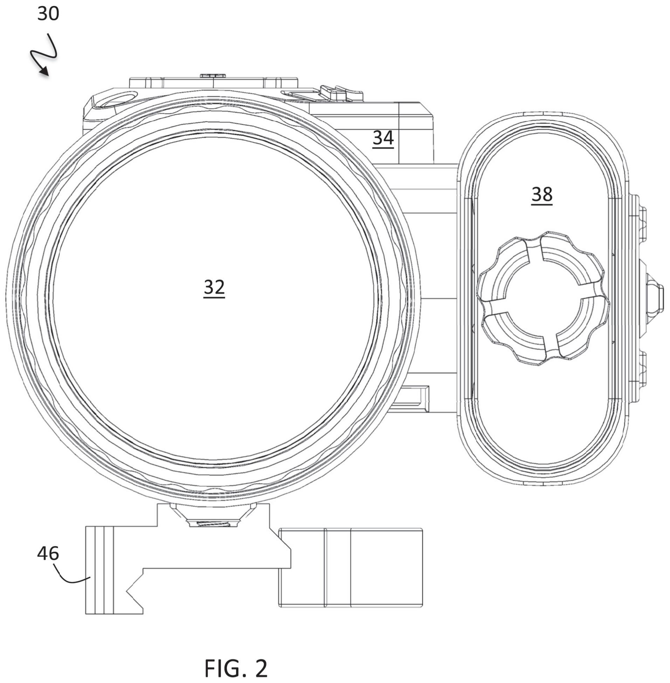

Referring to FIG. 2, a front view of the thermal imaging device 30 shows the objective lens 32, the body 34, the battery pack 38, and a weapon mount adapter 46 for attaching the thermal imaging device to a rail on a firearm. The weapon mount adapter 46 and the rail combination may comply with any one of a number of different standards for attaching day scopes, thermal imaging devices, etc. to a firearm. In other embodiments, the thermal imaging device 30 may be mounted directly to the front of the day scope and not use any rail at all. Generally, the system described herein may be used with any mounting mechanism where the thermal imaging device 30 is fixedly attached in front of the day scope so that the thermal image from the thermal imaging device 30 is viewed through the day scope.

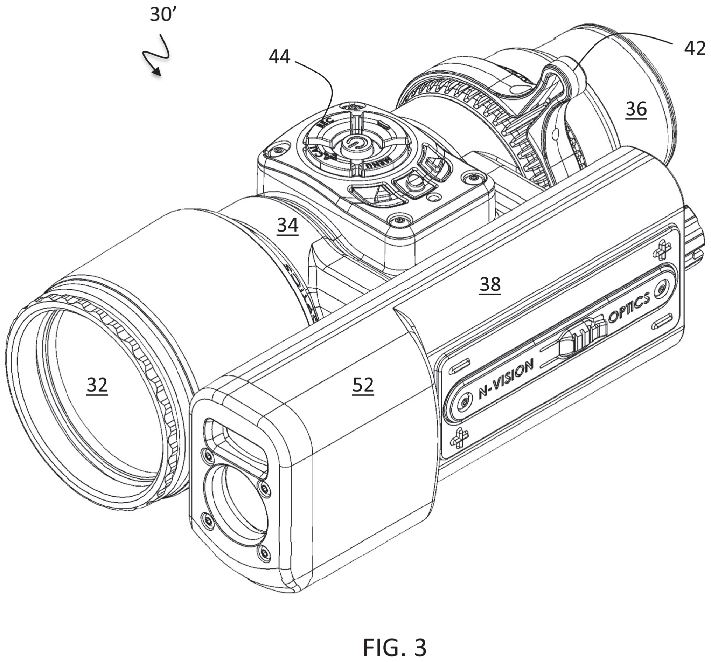

Referring to FIG. 3, an alternative embodiment of a thermal imaging device 30' includes many of the same components as the thermal imaging device 30, including the objective lens 32, the body 34, the eyepiece 36, the battery pack 38, the focus ring 42, and the control 44. The thermal imaging device 30' also includes a conventional laser range finder 52, mounted in front of the battery pack 38, that measures distances to objects using a laser. Signals from the laser range finder 52 are provided to the processing device (not shown in FIG. 3) that integrates the signals with the thermal image by displaying laser range information in one or more overlay layers on the thermal image. As described in more detail elsewhere herein, the control 44 may be used to control aspects of the laser range finder 52 and control integration of signals from the laser range finder 52. In the discussion herein, reference to the thermal imaging device 30 should be understood to also include a reference to the thermal imaging device 30' with the laser range finder 52 unless explicitly indicated otherwise.

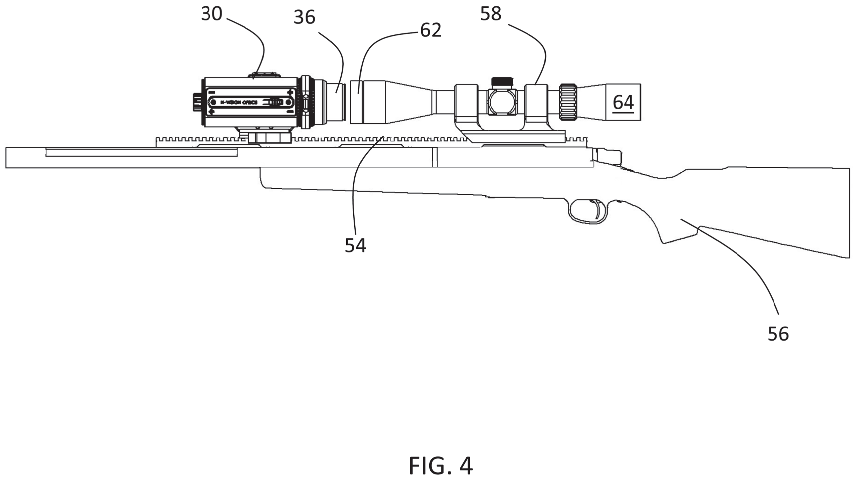

Referring to FIG. 4, the thermal imaging device 30 is shown being mounted in a conventional fashion to a rail 54 that is attached to a rifle 56. In an embodiment herein, the rail 54 may be a MIL-STD-1913 rail, which is also known as a "Picatinny Rail", although the invention may be practiced using any appropriate mounting mechanism. A day scope 58 is also attached to the rail 54 of the rifle 56. In other embodiments (not shown in FIG. 4) a different, but similar, rail or similar mechanism may be used to attach the day scope 58. The thermal imaging device 30 is placed in front of the day scope 58 to roughly align the eyepiece 36 of the thermal imaging device 30 with an objective lens 62 at the front of the day scope 58. A user looking through an eyepiece 64 of the day scope 58 will see the thermal image from the thermal imaging device 30 that is visible at the eyepiece 36 of the thermal imaging device 30. In other embodiments (not shown in FIG. 4), the thermal imaging device 30 may be mounted directly to the day scope 58 by coupling the eyepiece 36 of the thermal imaging device 30 to the objective lens 62 of the day scope using, for example, an adapter or by direct attachment. Note that, although the system described herein is illustrated using the rifle 56, the invention may be used with any other appropriate other type of firearms.

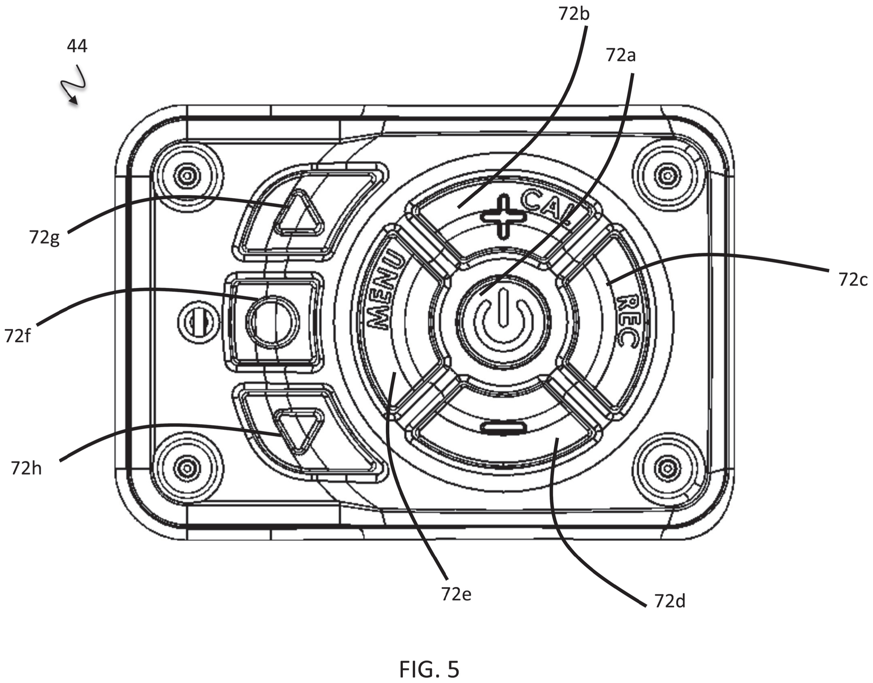

Referring to FIG. 5, the control 44 is shown in more detail as including a plurality of buttons 72a-72h. In an embodiment herein, many of the buttons 72a-72h have two actuation modes, a first actuation mode (quick click) that is activated by a relatively quick press of one of the buttons 72a-72h and a second actuation mode (referred to herein as "holding") that is activated by pressing one of the buttons 72a-72h for a relatively long time (e.g., two seconds or more). At least some of the buttons 72a-72h may perform a first function in response to the first actuation mode and may perform a second, different, function in response to the second actuation mode. In some instances, the different second function may be somewhat related to the first function (e.g., snap a photo vs. record a video).

In an embodiment herein, the button 72a powers on the thermal imaging device 30 when the button 72a is held down. Clicking the button 72a causes the thermal image to cycle through different zoom magnifications (e.g., 1x, 2x, 4x, 8x, and back to 1x). Holding the button 72b causes the thermal imaging device 30 to perform scene non-uniformity correction; the thermal imaging device 30 is pointed at a scene having a relatively uniform temperature while holding down the button 72b. Clicking the button 72b may cause the thermal imaging device 30 to perform a non-uniformity correction while actuating an internal shutter in front of the thermal sensor located inside the body 34 of the thermal imaging device 30. In some embodiments, the button 72b may be used for menu navigation, possible instead of other functionality described herein. Note that, in other embodiments, the system may be configured so that any of the buttons 72a-72h may be used for menu navigation as described elsewhere herein as well as non-menu navigation.

Holding the button 72c causes the thermal imaging device 30 to record a video of the thermal image. The video starts recording after the button 72c is held down and stops recording when the user clicks the button 72c. Clicking the button 72c causes the thermal imaging device 30 to take a photograph. The video or photograph may be offloaded from the thermal imaging device 30 in a conventional manner using a wireless technology, such as Bluetooth or WiFi, or may be offloaded from the thermal imaging device 30 to a computer (desktop or laptop) or a mobile device using a wired connection, such as a USB connection.

The button 72d is used when the thermal imaging device 30' includes the laser ranger finder 52. Clicking the button 72d displays, in the eyepiece 36 with the one or more overlay layers, a distance detected by the laser range finder 52. Holding the button 72d performs conventional ballistic calculations based on the distance and other factors, such as ammunition type, wind speed, temperature, etc. The result of the ballistic calculations may be displayed as part of an image provided by the thermal imaging device 30 and includes instructions to a user for adjusting an aiming point in the day scope. In some embodiments, the button 72d may be used for menu navigation irrespective of whether the thermal imaging device 30' includes the laser range finder 52. Note that, in the case of the thermal imaging device 30 without a laser range finder, one or both of the buttons 72b, 72d may be used to adjust brightness or any other appropriate functionality.

Clicking the button 72e provides a mechanism to allow the user to adjust the polarity of the thermal image. Since the thermal imaging device 30 essentially detects the temperature of objects, it is possible to use different colors and/or visual schemes to represent relative temperatures. For example, it is possible to choose a polarity or colorization scheme in which red represents relatively warm objects and/or portions of objects and blue represents relatively cold objects and/or portions of objects. If a colorization scheme of the thermal image is black and white, then the polarity may be such that relative temperature is represented by lightness or darkness where, for example, the colder objects and/or portions of objects appear lighter. Note, of course, that setting the polarity by clicking the button 72e is a function of inherent capabilities of display technology of the thermal imaging device 30 so that, for example, polarity choices are restricted to black and white thermal images when the thermal image is provided by a black and white display. Holding the button 72e presents a user with a menu for entering/viewing parameters for the thermal imaging device 30. For example, the menu may allow the user to enter ammunition type, wind speed, temperature, etc. used for ballistic calculations or may provide conventional adjustments for the thermal imaging device 30, such as display brightness, gain, gamma correction, etc. When the thermal imaging device 30' does not include the laser range finder 52, the user may also manually enter distance information or distance information may be provided by an external range finder.

Clicking the button 72f toggles displaying the ballistic calculations in an overlay layer for the thermal image and a ballistic calculator is enabled. Holding the button 72f presents the user with an abbreviated version of the menu that is provided when the user holds the button 72e, discussed above. The abbreviated version of the menu may include a subset of items that are provided in connection with the menu provided when the user holds the button 72e.

The thermal imaging device 30 presents one or more overlay layers containing, for example, functional icons that relate to settings and other operations parameters of the thermal imaging device 30 along with the thermal image. Clicking the button 72g causes one or more images of the one or more overlay layers of the thermal imaging device 30 to scale out to allow a user to compensate for zooming out magnification adjustment of the day scope 58. Similarly, clicking the button 72h causes one or more images of the one or more overlay layers of the thermal imaging device 30 to scale in to allow a user to compensate for zooming in magnification adjustment of the day scope 58. Scaling out and scaling in are described in more detail elsewhere herein. The component(s) of one or more overlay layers may be placed in a semi-circular (or circular) perimeter to match a circular field-of-view of the day scope 58. If the user zooms in the day scope 58, thereby reducing a field-of-view of the day scope 58, components in the one or more overlay layers may no longer be visible. The user can adjust for this by clicking the button 72h to cause the one or more overlay layers to scale in and thus cause the components to once again be visible to the user through day scope 58. Similarly, when the user performs a zooming out function on the day scope 58, the user can cause the one or more overlay layers to scale out by clicking the button 72g. Scaling the one or more overlay layers in and out is described in more detail elsewhere herein.

Note that the specific functionality provided by the control 44 and the buttons 72a-72h may be modified without departing from the spirit and scope of the invention. Different types of controls may be used (e.g., touch controls) and the specific types of functionality provided by the controls may be modified. Moreover, control functionality may be provided remotely, either by a wired or wireless connection between a control device and the thermal imaging device 30. For example, it may be possible to control the thermal imaging device 30 using a smartphone or a Bluetooth remote device that communicates with the thermal imaging device 30 over the air or a wired remote device.

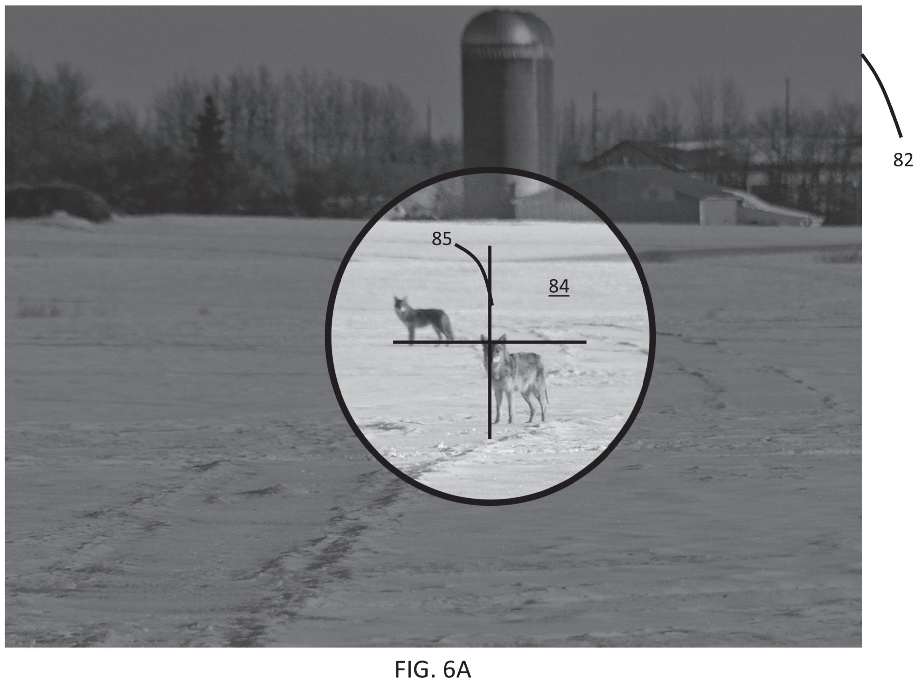

Referring to FIG. 6A, a scene 82 illustrates a field-of-view 84 of the scene 82 when viewed through the eyepiece 64 of the day scope 58. The day scope 58 superimposes a reticle 85 on the field of view to assist with aiming the firearm to which the day scope 58 is attached. The reticle 85 may be in a center of the field-of-view 84, but it is also possible for the reticle 85 to be slightly off-center in the vertical direction and/or the horizontal direction for various reasons, including adjustments/compensation for aiming the firearm.

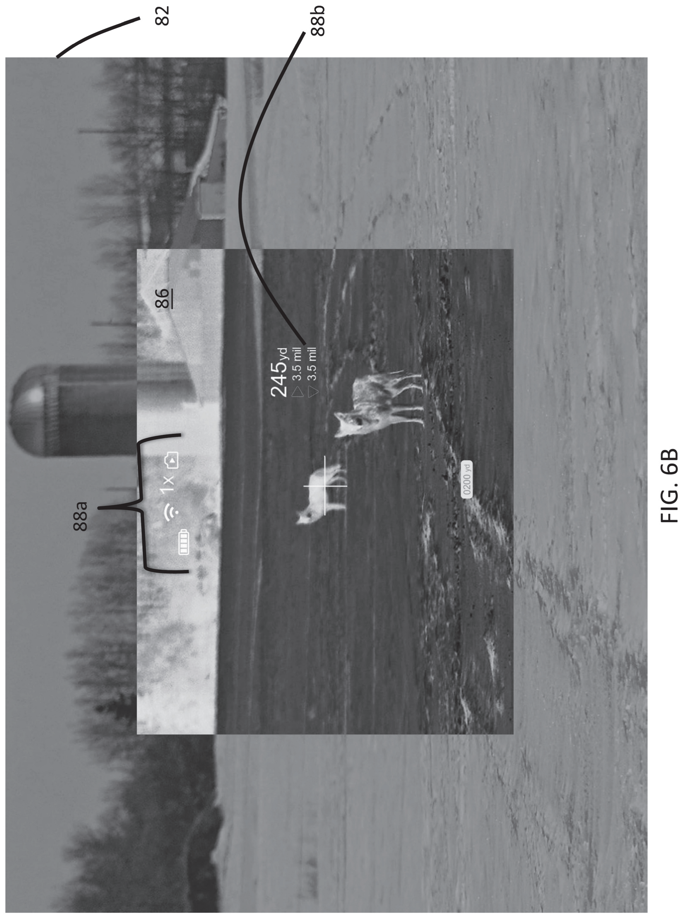

Referring to FIG. 6B, the scene 82 is shown with a field-of-view 86 of a thermal imaging device, such as the thermal imaging device 30, described elsewhere herein. The field-of-view 86 includes overlay icons 88a and overlay text 88b that provide information about the thermal imaging device and/or information about portion(s) of the scene 82 that are in the field-of-view 86 of the thermal imaging device 30. For example, the overlay icons 88a indicate battery charge level, WiFI connectivity, etc. while the overlay text 88b indicates a distance between the thermal imaging device and a target visible in the field-of-view 86. Generally, overlay components are provided by the thermal imaging device 30 in one or more overlay layers that may be separate from a visual layer that shows physical items in the scene 82. Overlay components could include one or more icons, status bar(s), menu settings, range distance value(s), ballistics calculations, and other information.

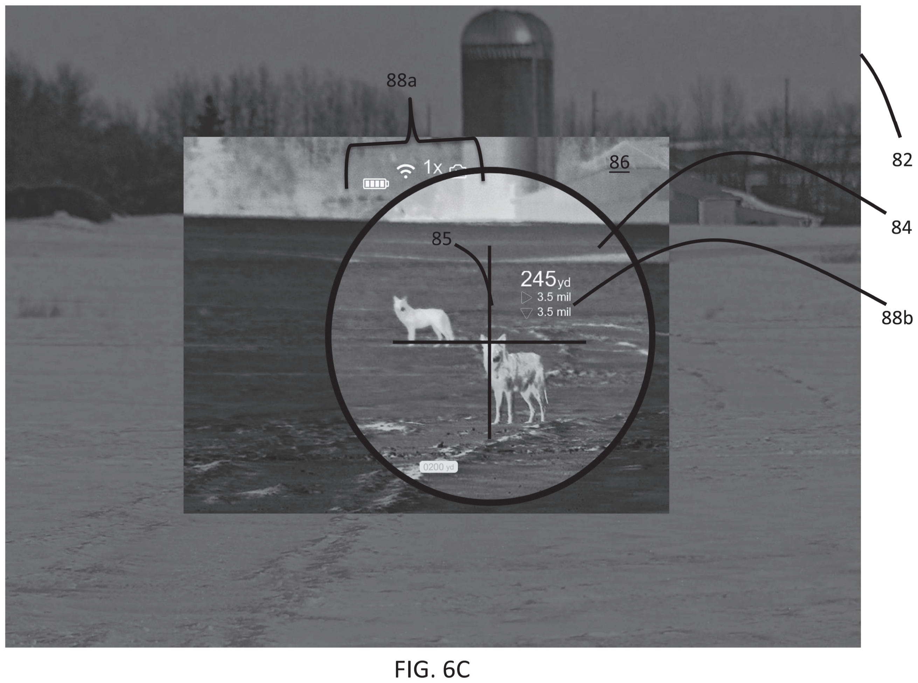

Referring to FIG. 6C, the scene 82 is shown with the field-of-view 84 of the day scope 58 superimposed on to the field-of-view 86 of the thermal imaging device 30, which occurs when the thermal imaging device 30 and the day scope 58 are mounted together on a firearm and aligned as shown in FIG. 4, discussed above. A user looking through the eyepiece 64 of the day scope 58 would see an intersection of the field-of-view 84 of the day scope 58 and the field-of-view 86 of the thermal imaging device 30. In the illustration of FIG. 6C, the alignment is such that the overlay icons 88a are not entirely present in the field-of-view 84 of the day scope 58. Any portion of the overlay icons 88a that is not present in the field-of-view 84 of the day scope 58 is not visible to a user looking through the eyepiece 64 of the day scope 58. Thus, for example, such a user would not be able to see the battery level icon, which is one of the icons of the overlay icons 88a.

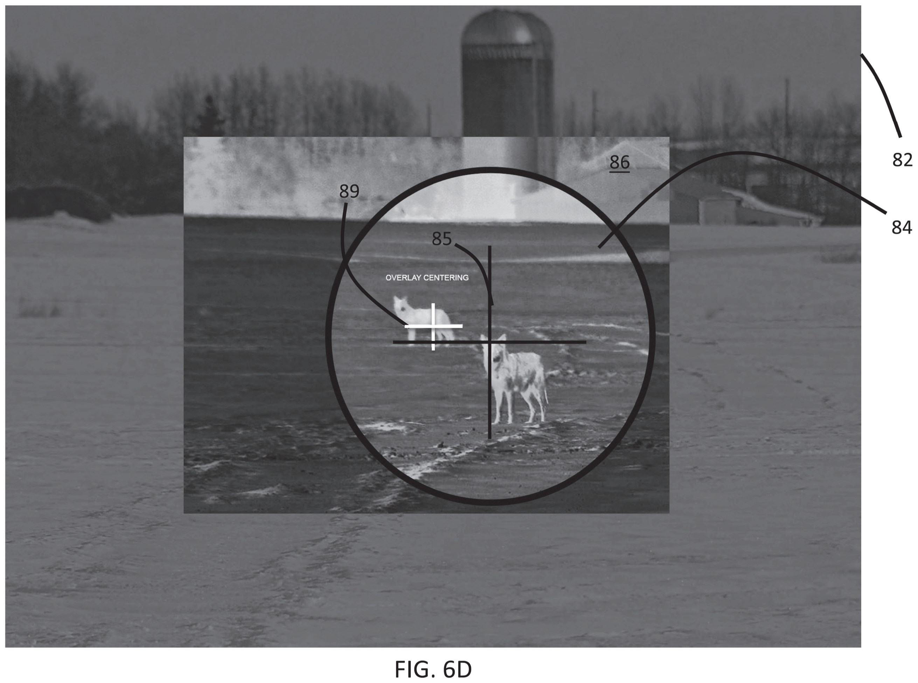

Referring to FIG. 6D, the scene 82 is shown with the field-of-view 84 of the day scope 58 superimposed on to the field-of-view 86 of the thermal imaging device 30. A centering marker 89 is provided by the thermal imaging device 30 in response to entering a special mode through selection of specific menu items (not shown) using the buttons 72a-72h. As discussed elsewhere herein, holding the button 72e causes the thermal imaging device 30 to display a menu. One of the selectable menu items places the thermal imaging device 30 in a special mode that facilitates the adjustments of the one or more overlay layers, described herein, which includes displaying the centering marker 89.

In the embodiment shown in FIG. 6D, no overlay components are visible because overlay components are removed from the field-of-view 86 when a user actuates the special mode to display the centering marker 89. However, in other embodiments, it is possible to maintain the overlay components when the centering marker 89 is actuated and visible. It is desirable to align the thermal imaging device 30 so that the centering marker 89 is in the center of the field-of-view 84 of the day scope 58. Note that one possibility for performing the alignment is to physically adjust a connection (e.g., a rail) between the thermal imaging device 30 and a firearm to which the thermal imaging device 30 is connected. However, as discussed in detail below, it is also possible to use the control 42 of the thermal imaging device 30 to perform the adjustment.

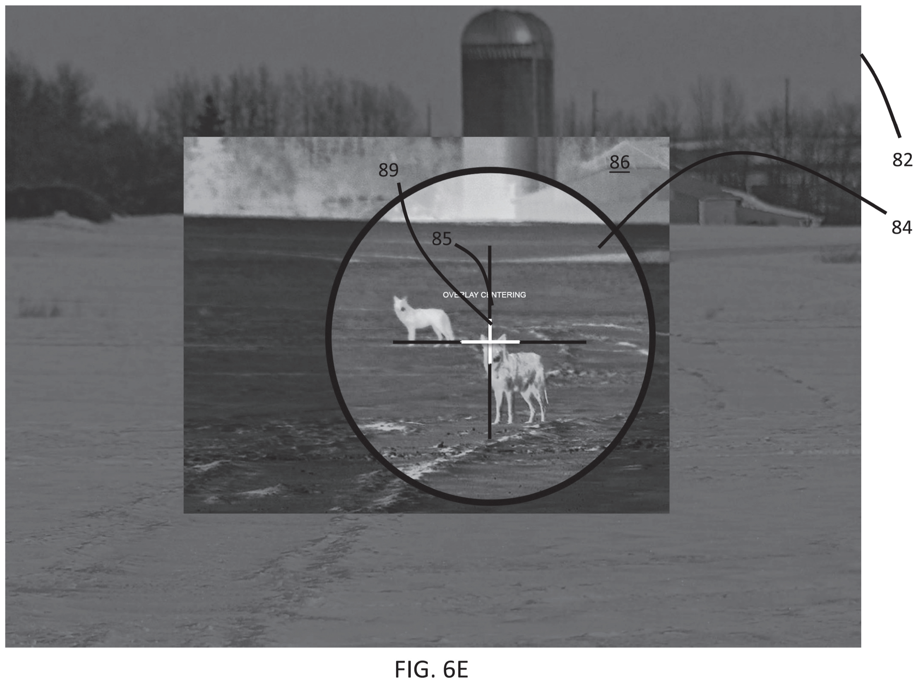

Referring to FIG. 6E, the scene 82 is shown with the field-of-view 84 of the day scope 58 superimposed on to the field-of-view 86 of the thermal imaging device 30 and the centering marker 89 aligned with the reticle 85 of the day scope 58. The user actuates the buttons 72b-72e while the thermal imaging device 309 is in the special mode (discussed above) to move the centering marker 89 from the position shown in FIG. 6D to the position shown in FIG. 6E. Each of the buttons 72b-72e moves the centering marker 89 in a different direction. As discussed below, aligning the centering marker 89 with the reticle 85 causes the overlay components to move into the field-of-view 84 of the day scope 58.

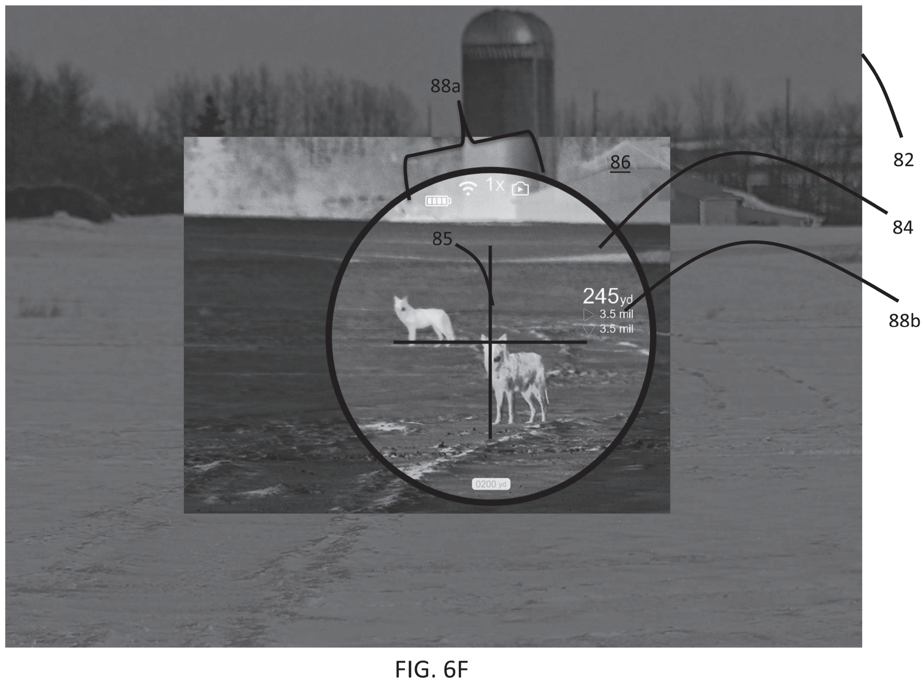

Referring to FIG. 6F, the scene 82 is shown with the field-of-view 84 of the day scope 58 superimposed on to the field-of-view 86 of the thermal imaging device 30 and the overlay icons 88a and the overlay text 88b visible in the field-of-view 86 of the thermal imaging device 30. There is no centering marker in FIG. 6F. The field-of-view 86 shown in FIG. 6F may represent the thermal imaging device 30 following exiting the special mode (discussed above). Note that, in other embodiments (not shown), it is possible to show a centering marker along with overlay components. In the scene 82, the overlay icons 88a are shown within the field-of-view 84 of the day scope 58. Thus, effectively centering the overlay layer of the thermal imaging device 30 with respect to the field-of-view 84 of the day scope 58 facilitates viewing all of the overlay components of the thermal imaging device 30 in the field-of-view 84 of the day scope 58.

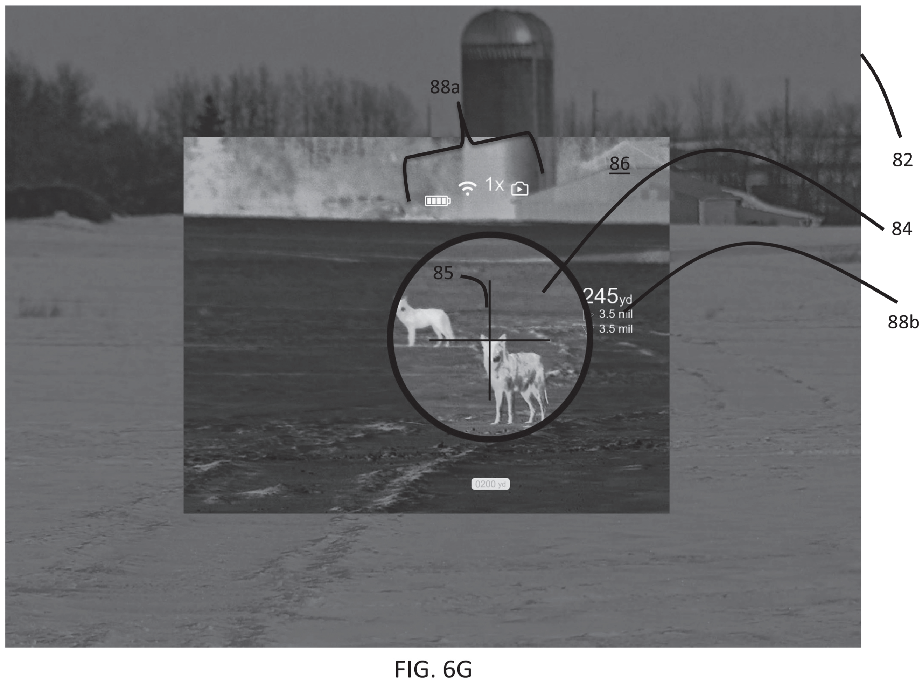

Referring to FIG. 6G, the field-of-view 84 of the day scope 58 contracts when a user increases magnification of the day scope 58 by zooming in. Note that the field-of-view 86 of the thermal imaging device 30 does not change even though the field-of-view 84 of the day scope 58 has contracted since control of the day scope 58 may be independent of control of the thermal imaging device 30. Generally, the field-of-view 84 contracts about a center point thereof (at or near a center of the reticle 85), but of course it is possible to contract the field-of-view 84 about a different point. In any event, contracting the field-of-view 84 causes the overlay icons 88a and the overlay text 88b to be out of the field-of -view 84 of the day scope 58 and thus not visible to a user looking through the eye piece 64 of the day scope 58. It is of course desirable to have the overlay icons 88a and the overlay text 88b be visible to a user looking through the eye piece 64 of the day scope 58.

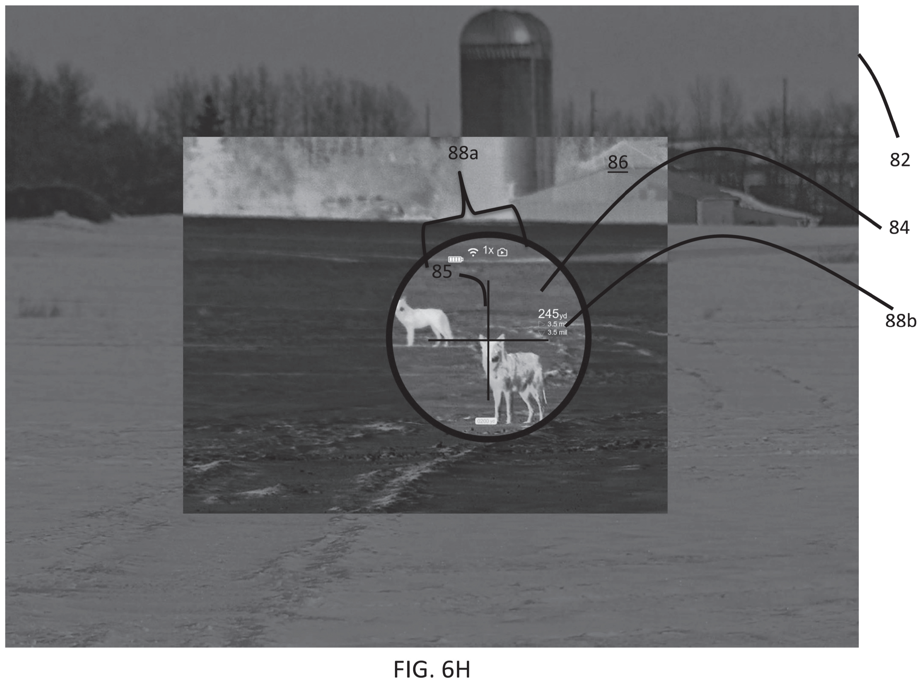

Referring to FIG. 6H, the field-of-view 84 of the day scope 58 and the field-of-view 86 of the thermal imaging device 30 are the same as what is shown in FIG. 6G. However, the overlay icons 88a and the overlay text 88b have transitioned to be within the field-of-view 84 of the day scope 58. A user transitions the overlay components 88a, 88b by actuating one of the buttons 72g, 72h (discussed above). Generally, at least one of the one or more overlay layers of the thermal imaging device 30 is made to contract, causing the overlay components 88a, 88b to move closer to a center of the field-of-view 84 of the day scope 58 (and in somewhat opposite directions). One of the buttons 72g, 72h contracts the one or more overlay layers while the other one of the buttons 72g, 72h expands the one or more overlay layers. Note that the overlay icons 88a and the overlay text 88b may also shrink and expand. In some embodiments, the amount of shrinking or expansion may be proportional to a transition distance of the overlay components 88a, 88b, although it is possible to have the amount of shrinking or expansion be independent of the transition distance or to have the overlay components not change size at all.

Although the invention has been illustrated herein with specific actuation of certain ones of the buttons 72a-72h, it will be appreciated that the invention may be practiced using any appropriate controls/modes, including assigning different ones of the buttons 72a-72h to move, expand, and contract the one or more overlay layers. It is also possible to forgo a special mode altogether and provide dedicated controls for manipulating the one or more overlay layers. Of course, as discussed elsewhere herein, other types of controls for providing functionality described herein are also possible, including touch controls and/or control by a remote device.

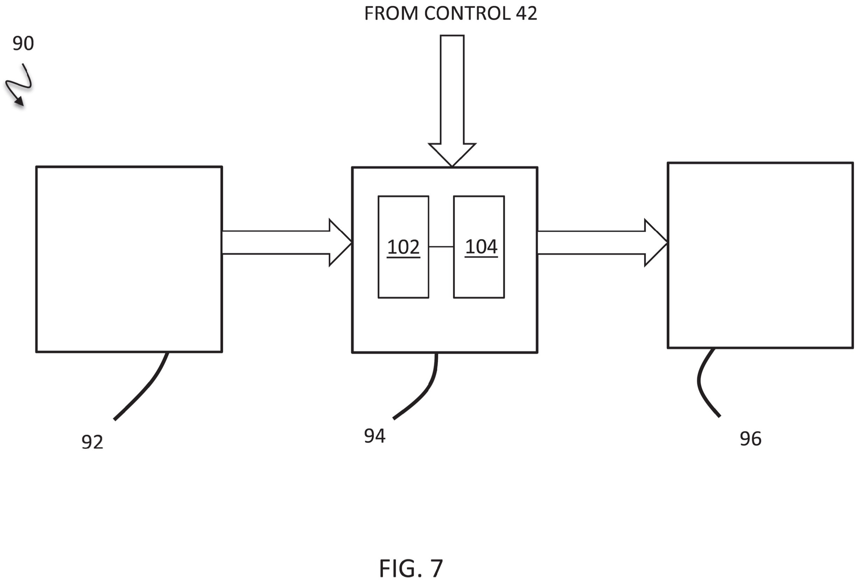

Referring to FIG. 7, a schematic diagram 90 illustrates components of the thermal imaging device 30 including an infrared sensor 92, a processing board 94, and a display 96. The processing board 94 may include a processing device 102 and a memory 104, which could be a volatile memory, a non-volatile memory, or a combination thereof. The processing device 102 could be a conventional processor, one or more FPGA(s), one or more ASIC(s), or any device capable of providing the processing functionality described herein. In an embodiment herein, the memory 104 has at least a portion that is non-volatile and that includes one or more programs that, when executed by the processing device 102, provide the functionality described herein. The one or more programs may be implemented using an embedded operating system. The control 42 may provide input to the processing board 94, which adjusts the display 96 and/or modifies other operational parameters based on the input from the control 44. The infrared sensor 92 may be any conventional infrared sensor capable of providing the functionality described herein. Similarly, the processing board 94, including the processing device 102 and the memory 104, are also conventional components that are programmable to provide the functionality described herein.

The display 96 may be implemented using a black-and-white version of an MDP09AA OLED Microdisplay provided by the MICROOLED company of Grenoble, France. The sub-pixels of the MDP09AA are square so that so that driving the display 96 in black and white mode allows use of the sub-pixels as additional black and white pixels to effectively double the resolution. Increasing the resolution of the thermal imaging device 30 facilitates providing a viable image to the day scope 58 at higher magnification levels. Of course, the invention is not restricted to use of any particular display technology and any other appropriate type of display may be used.

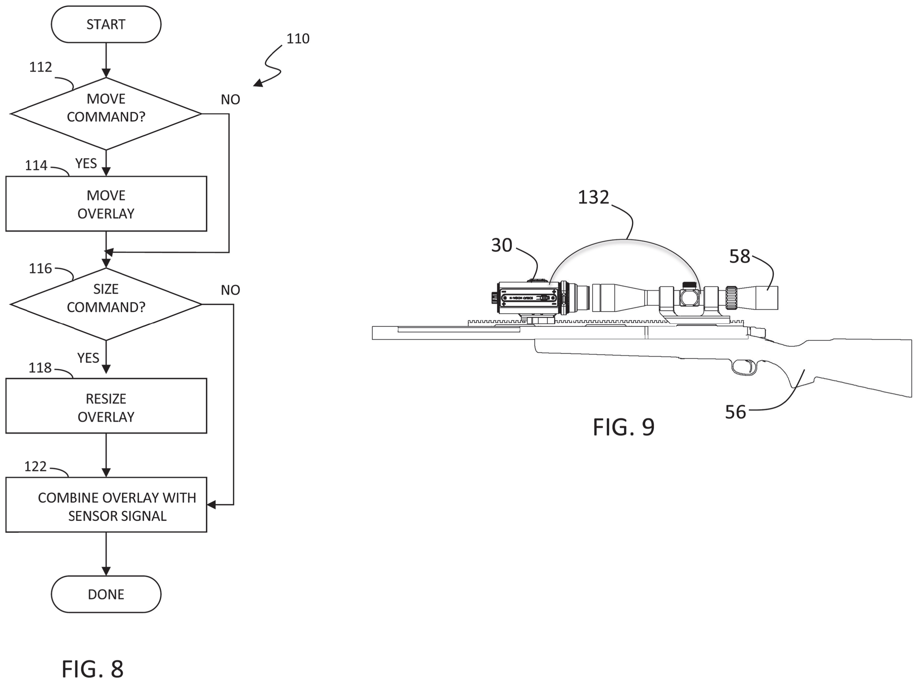

Referring to FIG. 8, a flow diagram 110 illustrates processing performed by software executed by the processing device 102 in response to receiving a command to scale in or scale out one or more overlay layers provided by the thermal imaging device 30. In the embodiment disclosed herein, the user presses one of the buttons 72g, 72h of the control 42 to expand or contract the one or more overlay layers containing overlay components and uses the buttons 72b-72e to center the one or more overlay layers. However, it will be appreciated that any appropriate control may be used to provide a command to adjust the one or more overlay layers as described herein.

Processing for the flow diagram begins at a step 112 where it is determined if a command to move (center) at least one of the one or more overlay layers has been received. As discussed in more detail in connection with FIGs. 6A-6H, it may be desirable to center the at least one of the one or more overlay layers with respect to the field of view 84 of the day scope 58. If it is determined at the step 112 that a move command has been received, then control passes from the test step 112 to a step 114 where the at least one of the one or more overlay layers of the thermal imaging device 30 is moved based on control inputs from a user, as discussed in detail elsewhere herein.

Following the step 114 or following the step 112 if a move command is not received is a test step 116 where it is determined if a size command has been received. As discussed elsewhere herein, it is possible to expand or contract the at least one of the one or more overlay layers based on user input. If it is determined at the test step 116 that a size change command has been received, then control passes from the step 116 to a step 118 where the at least one of the one or more overlay layers is resized. Following the step 118, or following the step 116 if a size change command is not received, is a step 122 where the at least one of the one or more overlay layers, which contains overlay components for the thermal imaging device 30, is combined with the signal from the infrared sensor 92 by superimposing the signal from the infrared sensor 92 with the one or more overlay layers, as discussed elsewhere herein. Following the step 122, processing is complete. Note, of course, that it is possible to provide different implementations of the same or similar logic without departing from the spirit and scope of the invention.

Referring to FIG. 9, an alternative embodiment is shown where the day scope 58 and the thermal imaging device 30 mounted on the rifle 56 communicate via a wired connection 132 that exchanges data between the day scope 58 and the thermal imaging device 30. In an embodiment herein, data indicative of magnification settings actuated by the user at the day scope 58 is provided to the thermal imaging device 30. The thermal imaging device 30 then automatically adjusts/scales at least one of the one or more overlay layers based on the data, possibly without any user input to or user actuation of the thermal imaging device 30. The automation may determine the adjustment that results in the at least one of the one or more overlay layers being in a visible portion of an image viewed through the day scope 58 following a magnification change by the user at the day scope 58. In some embodiments, it may be possible to replace the wired connection 132 with a wireless connection using any appropriate wireless technology, including any conventional wireless technology.

Various embodiments discussed herein may be combined with each other in appropriate combinations in connection with the system described herein. Additionally, in some instances, the order of steps in the flowcharts, flow diagrams and/or described flow processing may be modified, where appropriate. Subsequently, system configurations may vary from the illustrations presented herein. Further, various aspects of the system described herein may be deployed on any appropriate processing device using one or more use operating system(s) suitable for providing the functionality described herein, including, without limitation, an operating system selected from the group consisting of: an embedded operating system, iOS, Android OS, Windows, Blackberry OS and Linux OS. Certain components of the system may be cloud based.

Software implementations of the system described herein may include executable code that is stored in a computer readable medium and executed by one or more processors. The computer readable medium may be non-transitory and include a computer hard drive, ROM, RAM, flash memory, portable computer storage media such as a CD-ROM, a DVD-ROM, a flash drive, an SD card and/or other drive with, for example, a universal serial bus (USB) interface, and/or any other appropriate tangible or non-transitory computer readable medium or computer memory on which executable code may be stored and executed by a processor. The software may be bundled (pre-loaded), installed from an app store or downloaded from a location of a network operator. The system described herein may be used in connection with any appropriate operating system.

Other embodiments of the invention will be apparent to those skilled in the art from a consideration of the specification or practice of the invention disclosed herein. It is intended that the specification and examples be considered as exemplary only, with the true scope and spirit of the invention being indicated by the following claims.

Some of the aspects explained above are briefly summarized in the following with reference to numbered examples.

Example 1. A firearm-mounted clip-on device, comprising: a weapon mount adaptor disposed on the firearm-mounted clip-on device to attach the firearm-mounted clip-on device to a firearm in front of a day scope mounted on the firearm; a display that is viewable from an eyepiece of the day scope that shows objects in a field-of-view of the firearm-mounted clip-on device and one or more overlay layers superimposed thereon and containing one or more overlay components; and a control that adjusts the one or more overlay layers without moving or resizing objects in a field-of-view of the day scope to cause the overlay components to appear in the eyepiece in the field-of-view of the day scope.

Example 2. The firearm-mounted clip-on device of example 1, further comprising an infrared sensor that provides a thermal image to the display.

Example 3. The firearm-mounted clip-on device of example 2, wherein the display shows the thermal image in black-and-white.

Example 4. The firearm-mounted clip-on device of example 1, further comprising a laser range finder that that measures distances to objects in the field-of-view of the firearm-mounted clip-on device.

Example 5. The firearm-mounted clip-on device of example 4, wherein at least some of the overlay components include text that indicates a distance to at least one of the objects in the field-of-view of the firearm-mounted clip-on device measured by the laser range finder.

Example 6. The firearm-mounted clip-on device of example 1, wherein the control includes a plurality of buttons mounted on the firearm-mounted clip-on device.

Example 7. The firearm-mounted clip-on device of example 1, wherein at least some of the overlay components correspond to operation of the firearm-mounted clip-on device.

Example 8. The firearm-mounted clip-on device of example 1, wherein the overlay components include at least one of: icons and text.

Example 9. The firearm-mounted clip-on device of example 1, wherein adjusting the one or more overlay layers includes moving at least one of the one or more overlay layers up and down and side to side and/or expanding and contracting at least one of the one or more overlay layers.

Example 10. The firearm-mounted clip-on device of example 9, wherein a size of the overlay components changes when the at least one of the one or more overlay layers is expanded or contracted.

Example 11. A method of using a firearm-mounted clip-on device, comprising: mounting the firearm-mounted clip-on device on a firearm in front of a day scope mounted on the firearm to provide a view of a display of the firearm-mounted clip-on device through an eyepiece of the day scope; and adjusting one or more overlay layers of the firearm-mounted clip-on device without moving or resizing objects in a field-of-view of the day scope to cause overlay components of the one or more overlay layers to appear in the eyepiece in the field-of-view of the day scope.

Example 12. The method of example 11, wherein the firearm-mounted clip-on device includes an infrared sensor that provides a thermal image to the display of the firearm-mounted clip-on device.

Example 13. The method of example 12, wherein the display of the firearm-mounted clip-on device shows the thermal image in black-and-white.

Example 14. The method of example 11, wherein the firearm-mounted clip-on device includes a laser range finder that that measures distances to objects in the field-of-view of the firearm-mounted clip-on device.

Example 15. The method of example 14, wherein at least some of the overlay components include text that indicates a distance to at least one of the objects in a field-of-view of the firearm-mounted clip-on device measured by the laser range finder.

Example 16. The method of example 11, wherein adjusting the one or more overlay layers includes actuating a plurality of buttons mounted on the firearm-mounted clip-on device.

Example 17. The method of example 11, wherein at least some components of the one or more overlay layers correspond to operation of the firearm-mounted clip-on device.

Example 18. The method of example 17, wherein the overlay components include at least one of: icons and text.

Example 19. The method of example 11, wherein adjusting the one or more overlay layers includes moving at least one of the one or more overlay layers up and down and side to side and/or expanding and contracting the at least one of the one or more overlay layers.

Example 20. The method of example 19, wherein a size of components of the at least one of the one or more overlay layers changes when the at least one of the one or more overlay layers is expanded or contracted.

## Claims

1. A firearm-mounted clip-on device, comprising:
a weapon mount adaptor disposed on the firearm-mounted clip-on device to attach the firearm-mounted clip-on device to a firearm in front of a day scope mounted on the firearm;
a display that is viewable from an eyepiece of the day scope that shows objects in a field-of-view of the firearm-mounted clip-on device and one or more overlay layers superimposed thereon and containing one or more overlay components; and
a control that adjusts the one or more overlay layers without moving or resizing objects in a field-of-view of the day scope to cause the overlay components to appear in the eyepiece in the field-of-view of the day scope.

2. The firearm-mounted clip-on device of claim 1, further comprising:
an infrared sensor that provides a thermal image to the display.

3. The firearm-mounted clip-on device of claim 2, wherein the display shows the thermal image in black-and-white.

4. The firearm-mounted clip-on device of any one of claims 1 to 3, further comprising:
a laser range finder that that measures distances to objects in the field-of-view of the firearm-mounted clip-on device.

5. The firearm-mounted clip-on device of claim 4, wherein at least some of the overlay components include text that indicates a distance to at least one of the objects in the field-of-view of the firearm-mounted clip-on device measured by the laser range finder.

6. The firearm-mounted clip-on device of any one of claims 1 to 5, wherein the control includes a plurality of buttons mounted on the firearm-mounted clip-on device.

7. The firearm-mounted clip-on device of any one of claims 1 to 6, wherein at least some of the overlay components correspond to operation of the firearm-mounted clip-on device.

8. The firearm-mounted clip-on device of any one of claims 1 to 7, wherein the overlay components include at least one of: icons and text.

9. The firearm-mounted clip-on device of any one of claims 1 to 8, wherein adjusting the one or more overlay layers includes moving at least one of the one or more overlay layers up and down and side to side and/or expanding and contracting at least one of the one or more overlay layers.

10. The firearm-mounted clip-on device of claim 9, wherein a size of the overlay components changes when the at least one of the one or more overlay layers is expanded or contracted.

11. A method of using a firearm-mounted clip-on device, comprising:
mounting the firearm-mounted clip-on device on a firearm in front of a day scope mounted on the firearm to provide a view of a display of the firearm-mounted clip-on device through an eyepiece of the day scope; and
adjusting one or more overlay layers of the firearm-mounted clip-on device without moving or resizing objects in a field-of-view of the day scope to cause overlay components of the one or more overlay layers to appear in the eyepiece in the field-of-view of the day scope.

12. The method of claim 11, wherein the firearm-mounted clip-on device includes an infrared sensor that provides a thermal image to the display of the firearm-mounted clip-on device.

13. The method of claim 12, wherein the display of the firearm-mounted clip-on device shows the thermal image in black-and-white.

14. The method of any one of claims 11 to 13, wherein the firearm-mounted clip-on device includes a laser range finder that that measures distances to objects in the field-of-view of the firearm-mounted clip-on device.

15. The method of claim 14, wherein at least some of the overlay components include text that indicates a distance to at least one of the objects in a field-of-view of the firearm-mounted clip-on device measured by the laser range finder.
